# EUROPÄISCHE PATENTANMELDUNG

(11) **EP 1 060 666 A2**
(43) Veröffentlichungstag der Anmeldung: **20.12.2000**
(21) Anmeldenummer: 00112326.4
(22) Anmeldetag: 08.06.2000
(51) Int. Cl.: A01L 5/00

(54) **Hufschuh**

(30) Priorität: 15.06.1999 DE 29910272 U
(71) Anmelder: Herrmann, Christian, 42653 Solingen (DE)
(72) Erfinder: Herrmann, Christian, 42653 Solingen (DE)
(74) Vertreter: Richter, Werdermann & Gerbaulet

(57) **Zusammenfassung**

Um einen Hufschuh (100) mit einer Sohle (11) aus Kunststoff derart auszugestalten, dass ein der jeweiligen Situation optimal angepaßter Beschlag zur Verfügung steht, wird vorgeschlagen, dass er Mittel (14, 19, 27, 30, 35) zur lösbaren Befestigung am Huf (22) und/oder Hufbeschlag (24) aufweist, insbesondere soll der Beschlag eine Anpassung an verhältnismäßig kurzzeitige Extremsituationen wie z.B. einen Geländeritt ermöglichen. Die Anpassung soll dabei insbesondere von Kindern, durchführbar sein.

## Beschreibung

Die Erfindung betrifft einen Hufschuh mit einer Sohle aus Kunststoff.

Hufschuhe der eingangs genannten Art sind für Huftiere, insbesondere für Pferde, seit längerem bekannt. So offenbart z.B. die DE 44 04 160 C2 einen vollständig aus Kunststoff bestehenden Hufbeschlag, welcher die übliche Hufeisenform hat und durch eine Mehrzahl von Einschnitten dehnbar ausgebildet ist. Mit diesem Hufbeschlag wird das Ziel verfolgt, dem Huf eines Pferdes die Bewegung gemäß dem natürlichen Hufmechanismus zu erlauben. Der Hufbeschlag wird wie die bekannten Hufeisen aus Metall mit Nägeln im Huf befestigt.

Andere bekannte Hufbeschläge aus Kunststoff werden dagegen eingesetzt, um die herkömmliche Befestigung mit Nägeln zu vermeiden, da diese in bestimmten Fällen problematisch bzw. undurchführbar sein kann. Dies ist z.B. bei Hufkrankheiten, bei spröden Hufen oder bei zu langsam wachsendem Hornmaterial der Hufe der Fall. In diesem Zusammenhang offenbart die DE 27 11 341 C2 einen aus mindestens zwei Elementen bestehenden Hufbeschlag, wobei ein L-förmiger Streifen dauerhaft am Huf festgeklebt wird und als ein Befestigungspunkt des eigentlichen Kunststoffbeschlages mit dem Huf dient.

Auch in der DE 38 32 702 C2 und der DE 38 40 223 A1 werden vollständig aus Kunststoff bestehende Hufbeschläge offenbart, welche nicht durch Nageln am Huf befestigt werden sollen. Stattdessen werden diese Beschläge durch Wärmeschrumpfung eines speziell verwendeten Kunststoffes am Huf befestigt.

Dem genannten Stand der Technik ist gemeinsam, dass jeweils eine dauerhafte Befestigung des Hufschuhs durch Nageln, Verkleben oder Aufschrumpfen angestrebt wird. Der Pferdehalter muss sich also in allen Fällen langfristig auf ein System des Hufbeschlages festlegen. Weiterhin sind die bekannte Systeme verhältnismäßig aufwendig in der Anbringung am Huf, so dass die in der Regel nur ein Fachmann vornehmen kann.

Der Erfindung lag die Aufgabe zugrunde, einen Hufschuh mit einer Sohle aus Kunststoff derart auszugestalten, dass ein der jeweiligen Situation optimal angepaßter Beschlag zur Verfügung steht. Insbesondere soll der Beschlag eine Anpassung an verhältnismäßig kurzzeitige Extremsituationen wie z.B. einen Geländeritt ermöglichen. Die Anpassung soll dabei insbesondere leicht und auch von ungeübten Personen, insbesondere von Kindern, durchführbar sein.

Diese Aufgabe wird durch die im Anspruch 1 angegebenen Merkmale gelöst.

Der Hufschuh mit einer Sohle aus Kunststoff enthält Mittel, mit welchen er lösbar am Huf und/oder am vorhandenen dauerhaften Beschlag eines Hufes befestigt werden kann. Der Hufschuh kann demnach insbesondere als Überschuh über einem vorhandenen Beschlag eingesetzt werden. Für die überwiegende Zahl der Einsatzfälle steht somit der "normale" Hufbeschlag, z.B. ein metallisches Hufeisen, zur Verfügung. Der Hufschuh kann gezielt in den Situationen eingesetzt werden, in denen es auf seine besonderen Eigenschaften ankommt. Für die situationsgerechte Gestaltung des Hufschuhs ebenso wie für die Mittel zu seiner lösbaren Befestigung gibt es verschiedene Realisierungsmöglichkeiten, welche im folgenden in Verbindung mit verschiedenen Ausgestaltungen der Erfindung erläutert werden.

Gemäß Anspruch 2 weist der Hufschuh mindestens einen von der Sohle abstehenden, im wesentlichen senkrecht zum Huf gerichteten und an den Huf anlegbaren Vorsprung auf. Dieser Vorsprung dient dazu, den Hufschuh in einer Bewegungsrichtung relativ zum Huf zu fixieren und ihm eine feste Anlage zu verschaffen. Vorzugsweise befindet sich bei einer in herkömmlicher Weise U-förmig ("hufeisenförmig") gebogenen Sohle jeweils am Ende des Bogens ein derartiger Vorsprung. Weiterhin kann bei einem derartig geformten Hufschuh ein weiterer Vorsprung in der Mitte des Rundbogens liegen. Die genannten Vorsprünge haben eine ähnliche Funktion und können ähnlich ausgestaltet sein wie die so genannten Aufzüge an herkömmlichen Hufeisen.

Gemäß Anspruch 3 weist die Sohle auf der dem Huf zugewandten Seite ein Bett für einen vorhandenen Hufbeschlag auf. Ein derartiges Bett unterstützt den sicheren Sitz des Hufschuhs an einem vorhandenen Beschlag. Da die vorhandenen Hufbeschläge in der Regel gewisse Standardgrößen aufweisen, kann das Bett in optimaler Passform zu diesen Standardgrößen ausgebildet werden.

Eine von mehreren Realisierungsmöglichkeiten für die Mittel zur lösbaren Befestigung des Hufschuhs besteht gemäß Anspruch 4 darin, dass diese mindestens einen Gürtelriemen enthalten, welcher mindestens einseitig an der Sohle befestigt ist und welcher im angelegten Gebrauchszustand des Hufschuhs über den Huf verläuft. Mit derartigen Gürtelriemen ist es auf einfache Weise möglich, den Hufschuh schnell und gleichzeitig sicher am Huf zu befestigen.

Die Gürtelriemen können dabei in bekannter Weise eine Schnalle und Löchern enthalten, mit denen ein individueller fester Sitz eingestellt werden kann. Die Gürtelriemen können z.B. aus Leder oder Kunststoff bestehen. Weiterhin können sie vorzugsweise elastische Abschnitte enthalten, welche beispielsweise aus Gummi bestehen können, so dass die Riemen unter einer dauerhaften elastischen Spannung befestigt werden können. Ferner ist es denkbar, die Riemenlänge über einen so genannten Klettverschluss einstellbar zu gestalten. Ein solcher Verschluss ist besonders schnell und einfach anzulegen, was gerade ungeübten Personen und insbesondere Kindern zugute kommt, da das Pferd nicht lange für das Anlegen des Hufschuhs stillhalten muss und daher nicht so leicht nervös wird.

Die genannten Gürtelriemen können auch an beiden Enden an der Sohle befestigt sein. Sie sind dann in der Regel so um den Huf gelegt, dass sie den Hufschuh hieran festklemmen. Bei einer Befestigung des Hufschuhs über Gürtelriemen sind vorzugsweise drei, vier oder mehr Punkte des Hufschuhs mit derartigen Gürtelriemen verbunden (Drei-Punkt- bzw. Vier-Punkt-Verbindung).

Eine andere Befestigungsmöglichkeit des Hufschuhs gemäß Anspruch 5 sieht ein Ankerelement vor, welches an der Außenfläche des Hufes gegen distale Verschiebungen fixiert befestigt werden kann und an welchem Gürtelriemen der o.g. Art zur Verbindung mit der Sohle angekoppelt sind. Der feste Sitz gegen distale Verschiebungen bedeutet, dass das Ankerelement nicht in Richtung vom Körper des Pferdes weg vom Huf abgezogen werden kann.

Ein derartiger Festsitz lässt sich z.B. durch eine entsprechende Formgebung des Ankerelementes erreichen. In der Regel hat der Huf einen konischen Verlauf, wobei der breiteste Querschnitt des Hufes am Ende des Hufes an der Tragsohle erreicht wird. Ein formstabiles Ankerelement, welches einen Durchmesser zwischen dem kleinsten und größten Durchmesser des Hufes umschließt, klemmt somit auf dem konischen Huf von selbst fest. Der wirksame Durchmesser des Ankerelementes ist vorzugsweise einstellbar gestaltet. Dabei kann das Ankerelement z.B. durch auf die Hufoberfläche gerichtete Schrauben am Huf fixiert werden.

Eine alternative Ausgestaltung der lösbaren Befestigung enthält gemäß Anspruch 6 ein Klemmelement, welches zum Huf gerichtet von der Sohle des Hufschuhs absteht und in seiner Neigung derart verändert werden kann, dass es in Anlage an den Huf gebracht werden kann. In der geöffneten, d.h. vom Huf weg gerichteten Stellung des Klemmelementes kann der Hufschuh leicht auf den Huf aufgesetzt werden. Sobald er dort richtig positioniert ist, kann durch Anlegen des Klemmelementes an den Huf der Hufschuh befestigt werden. Ferner ist es denkbar, dass das Klemmelement auch verschiebbar am Hufschuh befestigt ist, sodass es durch Verschiebung und Neigungsänderung zur Anlage an den Huf gebracht werden kann. Dabei sollte vorzugsweise die Verschiebebewegung unabhängig von der Neigungsveränderung durchführbar sein, sodass durch Einstellung der Verschiebeposition eine individuelle Anpassung des Hufschuhs an ein bestimmtes Pferd bzw. einen bestimmten Fuß eines Pferdes erfolgen kann, während die Neigungsveränderung nur noch zum Anlegen des Hufschuhs an diesen Fuß notwendig ist.

In einer vorteilhaften Ausgestaltung des genannten Hufschuhs gemäß Anspruch 7 erzeugen elastische Federelemente eine Anpresskraft des Klemmelementes auf den Huf. Der Hufschuh kann somit denkbar einfach nach Art eines Schnappverschlusses am Huf befestigt werden.

Gemäß Anspruch 8 kann das Klemmelement auch mit einem in der Außenfläche der Sohle befindlichen oder über die Außenfläche hinausstehenden Hebelelement derart in Verbindung stehen, dass ein Belastungsdruck auf das Hebelelement in einen Anpressdruck des Klemmelementes auf den Huf umgeformt wird. Ein derartiger Mechanismus führt in vorteilhafter Weise zu einer Selbstarretierung des Hufschuhs, da bei jedem Aufsetzen des Fußes und bei jeder Belastung des Hufschuhs die entstehenden Belastungskräfte zu einem festeren Andrücken des Klemmelementes und damit zu einem festeren Sitz des Hufschuhs führen. Dadurch ist es umgekehrt möglich, die eigentliche Befestigung des Hufschuhs im unbelasteten Zustand verhältnismäßig locker auszuführen, sodass der Hufschuh leicht gewechselt werden kann.

Gemäß Anspruch 9 enthält der Hufschuh vorzugsweise Stollen. Der Einsatz derartiger Stollen kommt in Betracht, um die Trittsicherheit eines Pferdes im Gelände zu verbessern. Hierdurch können beispielsweise ungeübte Reiter, insbesondere Kinder, dagegen gesichert werden, dass das Pferd aus einer momentanen Unsicherheit heraus strauchelt oder sich dem Willen des Reiters aufgrund der Unsicherheit widersetzt. Bisher war es notwendig, in ein metallisches Hufeisen, das mit entsprechenden Gewindebohrungen versehen war, mit Schraubgewindestiften versehene Stollen einzuschrauben. Da die Gewindebohrungen zumeist verschmutzt waren und Beschädigungen und Korrosion unterlagen, war es für den Reiter mit erheblichem Aufwand verbunden, die Stollen einzuschrauben. Oft war es notwendig, vor Einschraubung des Gewindes nicht nur die Gewindebohrungen zu säubern, sondern auch noch das Gewinde nachzuschneiden. Aus diesem Grunde unterblieb oft das Einschrauben von Stollen, was die Sicherheit des Pferdes und damit auch des Reiters in schwierigem Gelände verringert hat. Gegenüber dieser gefährlichen Situation schafft die vorliegende Erfindung Abhilfe. Für den Einsatz von Stollen ist es nämlich lediglich notwendig, einen mit geeigneten Stollen versehenen Hufschuh über den normalen Hufbeschlag überzuziehen. Die Anbringung des Hufschuhs ist dabei mit den erfindungsgemäßen Befestigungsmitteln in einfacher Weise möglich, sodass dies auch ungeübte Reiter durchführen können. Die Ausrüstung ist damit insbesondere für Pferde geeignet, die von Kindern geritten werden, da diese problemlos und ohne große Fingerfertigkeit und Kraft ihr Pferd mit entsprechenden Stollen versehen können, um die Sicherheit des Pferdes in schwierigem Gelände zu erhöhen.

Die Stollen können integrierter Bestandteil des Hufschuhs bzw. seiner Sohle sein. Gemäß Anspruch 10 ist es indes auch möglich, dass die Stollen wechselbar sind. Auf diese Weise kann derselbe Hufschuh für verschiedene Anforderungen mit verschiedenen Stollen ausgerüstet werden. Dabei begegnet der Wechsel der Stollen nicht den von herkömmlichen Hufeisen bekannten Problemen, da er einerseits am vom Pferd getrennten Hufschuh durchgeführt werden kann und somit nicht unter schwierigen Bedingungen und unter Zeitdruck stattfinden muss. Andererseits besteht keine Gefahr, dass die Gewindebohrungen im Hufschuh verschmutzt, beschädigt oder korrodiert sein könnten, da der Hufschuh in der Regel nicht ohne eingesetzte Stollen verwendet wird. Sollte dennoch ein Einsatz ohne Stollen in Betracht kommen, so können hierfür die Gewindebohrungen leicht mit Blindschrauben verschlossen und dadurch geschützt werden.

Die an einem Hufschuh angebrachten Stollen können insbesondere unterschiedliche Größen haben. So hat es sich als vorteilhaft gezeigt, wenn die vorderen Stollen kleiner ausgebildet werden und die hinteren Stollen zu beiden Enden des Hufschuhs hin größer ausgebildet sind. Natürlich können auch an den verschiedenen Füßen des Pferdes Stollen unterschiedlicher Art und Größe eingesetzt werden.

Gemäß Anspruch 11 enthalten die Stollen vorzugsweise einen Metallkern, welcher insbesondere aus Stahl bestehen kann. Grundsätzlich können die Stollen aus Kunststoff bestehen und mit dem Hufschuh einstückig durch Gießen hergestellt werden. Um den Verschleiß derartiger Stollen zu verringern, sollten sie vorzugsweise mit eingelegten Stahlstiften verstärkt werden.

Der Kunststoff, aus welchem die Sohle des Hufschuhs hergestellt ist, muss geeignete Eigenschaften in Hinblick auf die Herstellbarkeit und die Stabilität im Gebrauch aufweisen. Gemäß Anspruch 12 ist es vorteilhaft, wenn der Kunststoff ab ca. 500°C, vorzugsweise ab ca. 700°C, verformbar ist, sodass er an den jeweiligen Pferdehuf in der Form problemlos angepasst werden kann. Andererseits muss der Kunststoff ausreichend stabil sein, um den Belastungen auch beim Ritt außerhalb des Geländes Stand zu halten.

Gemäß Anspruch 13 handelt es sich vorzugsweise um einen hochfesten Kunststoff. Ein geeignetes Material ist insbesondere ein Polyurethanelastomer mit einer geeigneten Shore A Härte, beispielsweise von 95 bis 99. Andere geeignete Kunststoffe sind z.B. Polyethylen, Polypropylen, Polyvinylchlorid oder Polytetrafluoroethen (PTFE).

Die Dicke der Sohle sollte zur Gewährleistung einer ausreichenden Stabilität gemäß Anspruch 14 an keiner Stelle weniger als 0,5 mm betragen.

Ausführungsbeispiele der Erfindung werden nachstehend anhand der Zeichnungen näher erläutert. Es zeigt
- Figur 1: perspektivisch einen Hufschuh mit Drei-Punkt-Gürtelbefestigung;
- Figur 2: einen Hufschuh mit Stollen und einer Fünf-Punkt-Gürtelbefestigung;
- Figur 3: einen mit einem Ankerelement 21 am Huf befestigten Hufschuh;
- Figur 4: einen Schnitt durch ein selbstarretierendes Klemmelement;
- Figur 5: einen Schnitt durch ein mit einer Schraube arretiertes Klemmelement.

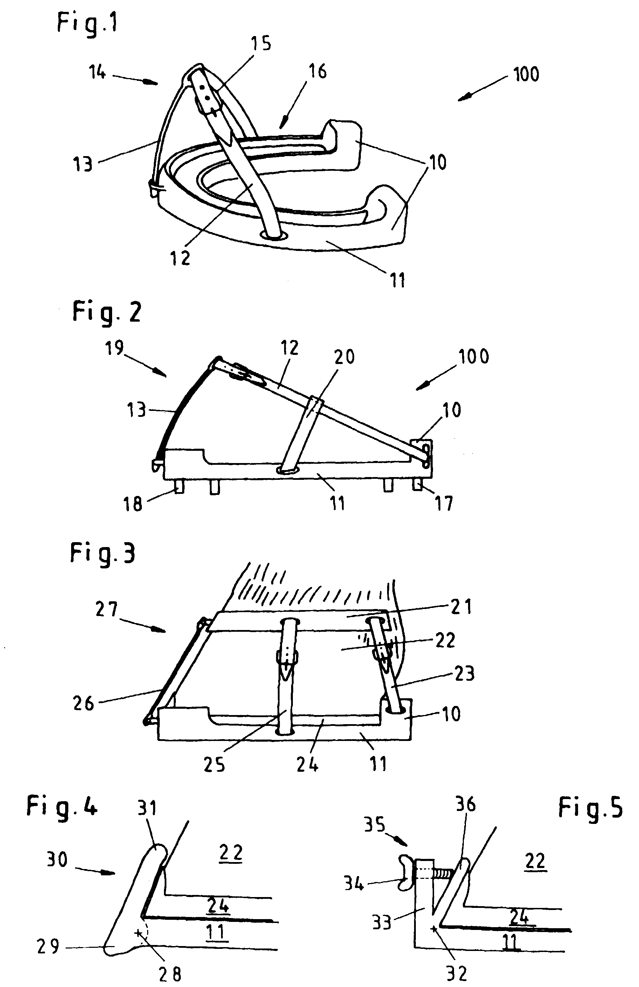

Figur 1 zeigt perspektivisch einen erfindungsgemäßen Hufschuh 100. Der Hufschuh hat die herkömmliche U-Form eines Hufeisens. Anders als herkömmliche Hufeisen besteht er jedoch nicht aus Metall, sondern aus einem geeigneten festen Kunststoff.

Der Hufschuh umfasst im einzelnen eine Sohle 11, welche unterhalb der Tragsohle des Hufes anzuordnen ist und welche den Kontakt zum Boden herstellt und die Belastungen aufnimmt. Auf der nach oben, d.h. zum Huf hin gewandten Seite der Sohle 11 besitzt der Hufschuh ein rinnenförmiges Bett 16 zur Aufnahme eines am Huf vorhandenen Hufeisens. An den beiden Enden des Bogens sind senkrecht nach oben (zum Huf hin) hoch stehende Vorsprünge 10 angeordnet. Diese dienen als Anschlag am vorhandenen Hufeisen und verhindern ein Verrutschen des Hufschuhs 100 nach vorne.

Zur weiteren Befestigung des Hufschuhs am Huf ist ein Riemensystem 14 vorgesehen. Dieses besteht aus einem von Schenkel zu Schenkel des Hufschuhs verlaufenden Gürtel 12, welcher in bekannter Weise eine Schnalle 15 und Löcher enthält, mit denen seine Länge bedarfsgerecht eingestellt werden kann. In der Mitte des Gürtels 12 ist ein zweiter Riemen 13 angesetzt, welcher zum Mittelpunkt des vorderen Rundbogens des Hufschuhs führt. Die Riemen 12, 13 sind an geeigneten Ösen an der Seitenfläche der Sohle 11 befestigt. Alternativ hierzu könnte der Riemen auch durch Durchbrechungen im Hufschuh geführt werden. Auch könnte der Riemen über einen Klettverschluss längenverstellbar sein. Wichtig für den Halt des Hufschuhs 100 am Huf ist, dass die Riemen 12, 13 so hoch über den Huf verlaufen, dass die zwischen Riemen 12 und Anschlägen 10 eingeschlossene Querschnittfläche kleiner ist als die Querschnittfläche der Tragsohle des (konischen) Hufes, sodass der Hufschuh nicht über die Tragsohle abgezogen werden kann.

In Figur 2 ist eine abgewandelte Form des Hufschuhs 100 dargestellt. Die Abwandlung betrifft zum einen den Befestigungsmechanismus 19, bei dem es sich im dargestellten Fall um eine Fünf-Punkt-Befestigung mit vier Riemen 12, 13, 20 handelt. Ein längenverstellbarer Gürtelriemen 12 verläuft von einem Vorsprung 10 am Ende des U-Bogens zum anderen. Er ist über drei Riemen 13, 20, die über seine Länge verteilt ansetzen, mit der Sohle 11 des Hufschuhs verbunden.

Der eigentliche Kunststoffkörper des Hufschuhs ist gegenüber Figur 1 dahingehend abgewandelt, dass sich das rinnenförmige Bett, welches ein vorhandenes Hufeisen aufnehmen kann, nicht über die gesamte Länge des Hufschuhs erstreckt. Hochstehende Ränder zur Ausbildung eines Bettes befinden sich vielmehr nur noch im Bereich des Rundbogens. Zwischen Rundbogen und den endseitigen Vorsprüngen 10 ist der Hufschuh dagegen flach und besteht nur aus der eigentlichen Sohle 11.

Weiterhin ist in Figur 2 erkennbar, dass auf der zum Boden gewandten Außenseite der Sohle 11 Stollen 17, 18 angeordnet sind. Dabei handelt es sich vorteilhafterweise um wechselbare Stollen, die nach Bedarf ein- und ausgeschraubt werden können. Derartige Stollen sind vorzugsweise durch Stahlkerne verstärkt. Zu erkennen ist auch, dass die vorderen, im Bereich des Rundbogens gelegenen Stollen 18 kleiner sind als die hinteren, an den Enden gelegenen Stollen 17. Eine derartige Größenverteilung hat sich als für den Griff des Hufeisens vorteilhaft erwiesen.

Eine weitere alternative Ausgestaltung des Hufschuhs ist in Figur 3 dargestellt. Figur 3 zeigt den Hufschuh zusammen mit einem Huf 22, welcher ein dauerhaft vorhandenes (metallisches) Hufeisen 24 trägt. Der Befestigungsmechanismus 27 des Hufschuhs besteht einerseits aus Riemen 23, 25 und 26, welche in bekannter Weise einseitig an der Sohle 11 befestigt sind. An ihrer anderen Seite sind die Riemen an einem Ankerelement 21 angekoppelt. Das Ankerelement 21 ist U-förmig und formstabil. Es kann z.B. aus Eisen hergestellt sein. Für die Ankopplung der Riemen weist es nach außen stehende Ösen auf. Das Ankerelement 21 wird von oben auf den Huf 22 gesetzt, auf welchem es sich aufgrund der konischen Form des Hufes in einer bestimmten Höhe festsetzt. Dieses Festsetzen kann zusätzlich durch Schrauben unterstützt werden, welche durch die Wand des Ankerelementes zum Huf hin geschraubt werden. Weiterhin ist denkbar, dass das Ankerelement 21 nach unten geneigte Fortsätze, wie z.B. Dornen oder eine entsprechende Aufrauung auf der dem Huf zugewandten Seite besitzt, sodass es sich bei einem Druck von oben in die Außenwand des Hufes 22 eingräbt. Ebenso ist es denkbar, das Ankerelement 21 am Huf 22 zu verkleben und damit dauerhaft anzubringen. Ein derartig dauerhaft angebrachtes Ankerelement 21 stört nicht, wenn der Hufschuh selbst nicht getragen wird. Es kann sein Funktion sehr lange erfüllen, da auf eine eventuelle Änderung seiner Lage (z.B. durch das Nachwachsen des Hornmaterials) problemlos über eine Veränderung der Länge der Gürtel 13, 20 reagiert werden kann.

In Figur 4 ist ein Schnitt durch eine Befestigung 30 mit einem Klemmelement 31 dargestellt. Das Klemmelement 31 befindet sich vorzugsweise am Mittelpunkt des Rundbogens der Sohle 11 des Hufschuhs. Es geht unter einem spitzen Winkel von der Sohle 11 aus und übergreift den Huf 22 bzw. das daran angebrachte Hufeisen 24. Weiterhin ist das Klemmelement 31 um einen angedeuteten Drehpunkt 28 schwenkbar, sodass es aus der dargestellten Anlageposition am Huf 22 herausbewegt werden kann, wenn der Hufschuh vom Huf abgenommen oder hierauf aufgesetzt werden soll. Der Drehpunkt 28 kann konstruktiv als echtes Gelenk ausgebildet sein, er kann jedoch auch durch die Elastizität des Materials verwirklicht werden. Vorzugsweise wird das Klemmelement 31 durch eine Federkraft in die dargestellte Anlageposition gedrückt. Ein derartiger Hufschuh kann also nach Art eines Schnappverschlusses auf den Huf 22 aufgesetzt werden.

Für einen stabilen Sitz des Hufschuhs unter Belastung sorgt dabei das Hebelelement 29. Dieses steht als kleine Erhebung über die untere Auftrittfläche der Sohle 11 hervor. Beim Aufsetzen des Hufschuhs auf den Boden kommt daher in der Regel das Hebelelement 29 mit dem Boden in Kontakt. Durch den Auftritt des Pferdes wird somit eine Belastung auf das Hebelelement ausgeübt, welche in bezug auf den Drehpunkt 28 zu einem Drehmoment auf das Klemmelement 31 führt. Dieses Drehmoment bewirkt ein festes Anpressen des Klemmelementes 31 an den Huf 22. Ein derartiger Mechanismus bewirkt also einen gerade unter Belastung sich selbst verstärkenden Sitz des Hufschuhs am Huf.

Eine andere Befestigungsmöglichkeit 35 ist in Figur 5 dargestellt. Bei dieser Variante wird das um den Drehpunkt 32 bewegliche Klemmelement 36 durch eine Schraube 34 in eine feste Anlage an den Huf 22 gebracht. Die Schraube 34 wird durch einen etwa senkrecht von der Sohle 11 nach oben abstehenden formstabilen Schenkel 33 getragen. Mit ihr kann ein dosierter Anpressdruck und damit ein einstellbarer fester Sitz des Hufschuhs am Huf vorgenommen werden. Vorzugsweise sind an der Schraube 34 Mittel vorgesehen, welche ein unbeabsichtigtes Losdrehen der Schraube verhindern.

### Bezugszeichen:

- 100: Hufschuh
- 10: Vorsprung
- 11: Sohle
- 12: Gürtelriemen
- 13: Gürtelriemen
- 14: Riemensystem
- 15: Schnalle
- 16: Bett
- 17: Stollen
- 18: Stollen
- 19: Riemensystem
- 20: Riemen
- 21: Ankerelement
- 22: Huf
- 23: Riemen
- 24: Hufeisen
- 25: Riemen
- 26: Riemen
- 27: Riemensystem
- 28: Drehpunkt
- 29: Hebelelement
- 30: Befestigung
- 31: Klemmelementes
- 32: Drehpunkt
- 33: Schenkel
- 34: Schraube
- 35: Befestigung
- 36: Klemmelement

## Patentansprüche

1. Hufschuh (100) mit einer Sohle (11) aus Kunststoff,
dadurch gekennzeichnet, dass der Hufschuh (100) Mittel (14, 19, 27, 30, 35) zur lösbaren Befestigung am Huf (22) und/oder Hufbeschlag (24) aufweist.

2. Hufschuh nach Anspruch 1,
dadurch gekennzeichnet, dass er mindestens einen von der Sohle (11) abstehenden, im wesentlichen senkrecht zum Huf (22) gerichteten und an den Huf anlegbaren Vorsprung (10, 31, 36) aufweist.

3. Hufschuh nach einem der Ansprüche 1 oder 2,
dadurch gekennzeichnet, dass die Sohle (11) auf der dem Huf (22) zugewandten Seite ein Bett (16) für einen vorhandenen Hufbeschlag (24) aufweist.

4. Hufschuh nach einem der Ansprüche 1 bis 3,
dadurch gekennzeichnet, dass die Mittel zur lösbaren Befestigung (14, 19, 27) einen Gürtelriemen (12, 13, 20, 23, 25, 26) enthalten, welcher mindestens einseitig an der Sohle (11) befestigt ist und im Gebrauchszustand über den Huf (22) verläuft.

5. Hufschuh nach Anspruch 4,
dadurch gekennzeichnet, dass der Hufschuh (100) ein Ankerelement (21) umfasst, welches an der Außenfläche des Hufes (22) gegen distale Verschiebungen fixiert befestigt werden kann und an welchem Gürtelriemen (23, 25, 26) zur Verbindung mit der Sohle (11) angekoppelt sind.

6. Hufschuh nach einem der Ansprüche 1 bis 5,
dadurch gekennzeichnet, dass die Mittel zur lösbaren Befestigung (30, 35) ein Klemmelement (31, 36) enthalten, welches zum Huf (22) gerichtet von der Sohle (11) des Hufschuhs absteht und in seiner Neigung derart verändert werden kann, dass es in Anlage an den Huf gebracht werden kann.

7. Hufschuh nach Anspruch 6,
dadurch gekennzeichnet, dass der Hufschuh (100) elastische Federelemente zur Erzeugung einer Anpresskraft des Klemmelementes (31, 36) auf den Huf (22) aufweist.

8. Hufschuh nach einem der Ansprüche 6 oder 7,
dadurch gekennzeichnet, dass das Klemmelement (31) mit einem in der Außenfläche der Sohle (11) befindlichen oder darüber hinausstehenden Hebelelement (29) derart in Verbindung steht, dass ein Belastungsdruck auf das Hebelelement in einen Anpressdruck des Klemmelementes auf den Huf (22) umgeformt wird.

9. Hufschuh nach einem der Ansprüche 1 bis 8,
dadurch gekennzeichnet, dass er Stollen (17, 18) enthält.

10. Hufschuh nach Anspruch 9,
dadurch gekennzeichnet, dass die Stollen (17, 18) wechselbar sind.

11. Hufschuh nach einem der Ansprüche 9 oder 10,
dadurch gekennzeichnet, dass die Stollen (17, 18) einen Metallkern enthalten, vorzugsweise einen Stahlkern.

12. Hufschuh nach einem der Ansprüche 1 bis 11,
dadurch gekennzeichnet, dass die Sohle (11) aus Kunststoff besteht, der ab 500°C, vorzugsweise ab 700°C, verformbar ist.

13. Hufschuh nach einem der Ansprüche 1 bis 12,
dadurch gekennzeichnet, dass die Sohle (11) aus hochfestem Kunststoff besteht.

14. Hufschuh nach einem der Ansprüche 1 bis 13,
dadurch gekennzeichnet, dass die Dicke der Sohle (11) mindestens 0,5 mm beträgt.
